# EUROPEAN PATENT APPLICATION

(11) **EP 0 887 145 A1**
(43) Date of publication of application: **30.12.1998**
(21) Application number: 98304931.3
(22) Date of filing: 23.06.1998
(51) Int. Cl.: B23K 37/06

(54) **Strip casting apparatus**

(30) Priority: 27.06.1997 AU PO7602/97
(71) Applicant: Ishikawajima-Harima Heavy Industries Co., Ltd., Chiyoda-ku, Tokyo 100 (JP); BHP STEEL (JLA) PTY. Ltd., Melbourne, Victoria 3000 (AU)
(72) Inventor: Sorensen, Peter Conrad, Balgownie, New South Wales 2519 (AU); Fish, John Andrew, Woonona, New South Wales 2517 (AU); Russell, Wayne, Wollongong, New South Wales 2500 (AU)
(74) Representative: Lerwill, John

(57) **Abstract**

Roll cleaning brush device (21) to clean peripheral surface of a metal casting roll (12) comprises brush mounting structure (22) disposed adjacent the roll (12), a series of brush heads (23) mounted by individual pivot arms (24) on a common pivot shaft (25) so as to form an elongate brush array (20) extending across the width of the roll. Each brush head (23) is individually pivotable and gravity biased against the roll surface. An oscillator (40) is operable to impart longitudinal oscillation to the brush array (20).

## Description

### BACKGROUND OF THE INVENTION

This invention relates to metal strip casting apparatus in which molten metal is brought into contact with a casting roll surface so as to solidify on that surface. More specifically, it is concerned with continuous cleaning of the casting rolls in such casters.

The casting apparatus may be either a single roll caster or a twin roll caster. In a twin roll caster hot metal is introduced between a pair of contra-rotated horizontal casting rolls which are cooled so that metal shells solidify on the moving roll surfaces and are brought together at the nip between them to produce a solidified strip product at the outlet from the roll nip. The term "nip" is used herein to refer to the general region at which the rolls are closest together. The hot metal may be introduced into the nip between the rolls via a tundish and a metal delivery nozzle located beneath the tundish so as to receive a flow of metal from the tundish and to direct it into the nip between the rolls.

In order to prevent accumulation of metal oxides and slags or other contaminants on the roll surfaces, cleaning devices such as brushes or cleaning belts may be applied to the outer longitudinal sides of the rolls so that the roll surfaces are continuously cleaned before moving into contact with the molten metal in advance of the nip. One apparatus of this kind is disclosed in Japanese Patent Publication JO3230849-A of Nippon Steel Corporation and Mitsubishi Heavy Industries KK. In this apparatus two sets of divided roller brushes are applied to the peripheral surface of each chilled casting roll with the brushes of one set being staggered with respect to those of the other set to provide a brushing action across the complete width of the casting roll. Japanese Patent Publication J01-083341-A also of Nippon Steel Corporation and Mitsubishi Heavy Industries KK also discloses a twin roll caster in which the casting rolls are cleaned by roller brushes.

Problems in maintaining adequate contact between cleaning roller brushes or belts and the chilled casting rollers can arise due to thermal expansion and contraction of the rolls during the casting process which can result in a change to the shape of the roll surface. More particularly, an initially cylindrical roll may become non-cylindrical so as to have a concave curvature or alternatively a convex or hogged configuration. The result is that the cleaner cannot be applied to the roll with even pressure through out its length and may even lose contact with some parts of the roll surface leading to an impaired cleaning action. Our United States Patents 5,307,861 and 5,575,327 disclose roll cleaning brush systems designed to address these problems by provided a large number of individual brush heads or segments which are spring loaded individually against the roll surface to be cleaned. However, it has been found that even with brushing systems of this kind it is not possible to ensure absolutely even brushing over the whole roll surface and that surface defects may still occur due to uneven brushing. In particular the spring loading is not entirely satisfactory in the harsh high temperature environment of the casting rolls and cannot maintain accurately constant biasing of the brush segments. In addition, rotary brushes produce a pattern of oxides on the roll surface because of the rotary pattern of brushing which can result in surface defects. It has been found that it is critically important to maintain even coverage and brushing effect across the complete width of the roll and to maintain an accurately constant bias of all brush parts against the roll. The present invention provides an improved apparatus which enables this to be achieved.

### SUMMARY OF THE INVENTION

According to the invention there is provided apparatus for casting metal strip comprising a casting roll, metal delivery means to deliver molten metal onto the peripheral surface of the casting roll, and a roll cleaning brush device to clean said roll surface, the cleaning brush device comprising a brush mounting structure disposed adjacent the roll, a series of brush heads mounted by individual pivot arms so as to form an elongate brush array extending across the width of the roll with each brush head of the array individually moveable by pivoting movement of its pivot arm about a respective individual pivot and gravity biased about its pivot against said roll surface, and oscillator means to oscillate the brush mounting structure so as to oscillate the brush array linearly of the array.

Preferably the pivot arms are pivotally mounted on a common pivot shaft forming part of the brush mounting structure so that the pivot mountings of the arms are spaced along the common shaft.

Preferably the gravity bias of the brush heads may be determined by bias weights mounted on the brush heads or on the pivot arms in the vicinity of the brush heads. Alternatively it would be possible to provide counter weighting of the pivot arms to produce the gravity bias of the brush heads.

Preferably the gravity bias of each brush head about its pivot is substantially perpendicular to the roll surface at the location where the brush head engages the roll surface.

Preferably the brush heads are each of elongate form. They may each comprise an elongate brush head base and brush bristles extending from the base along its length.

Preferably further the brush heads are disposed in a plurality of parallel rows defining the elongate brush array and spaced circumferentially of the roll surface with the brush heads of each row being staggered with respect to the brush heads of the or each adjacent row.

The brush heads may be fixed to the pivot arms or they may be mounted on the arms by brush head mountings allowing rocking of the brush heads to self adapt to the roll surface.

The apparatus may further comprise a second roll cleaning brush device comprising a second brush mounting structure disposed adjacent the roll, a second series of brush heads mounted by a second set of individual pivot arms so as to form a second elongate brush array extending across the width of the roll at a location spaced circumferentially of the roll from the first said elongate brush array and second oscillator means to oscillate the second brush mounting structure independently of the brush mounting structure of the first said brush device.

The oscillation of the second brush mounting structure may be out of phase with the brush mounting structure of the first said cleaning brush device. The two oscillations maybe 180° out of phase to provide dynamic balancing of the oscillatory movements.

### BRIEF DESCRIPTION OF THE DRAWINGS

In order that the invention may be more fully explained one particular embodiment will be described in detail with reference to the accompanying drawings in which:
Figure 1 illustrates a twin roll caster incorporating a pair of cleaning devices in accordance with the present invention;
Figure 2 is a view of one of the cleaning devices generally on the line 22 in Figure 1;
Figures 3 to 6 are cross sections respectively on the lines 3-3, 4-4, 5-5 and 6-6 in Figure 2; and
Figure 7 is an enlarged view of part of a brush head and pivot arm assembly incorporated in the brushing device illustrated in Figures 2 to 6.

### DESCRIPTION OF PREFERRED EMBODIMENT

The illustrated twin roll caster comprises a main machine frame 11 which supports a pair of parallel casting rolls 12. Molten metal is supplied during a casting operation from a ladle 13 through a refractory ladle outlet shroud 14 to a tundish 15 and thence through a metal delivery nozzle 16 into the nip 17 between the casting rolls 12. Hot metal thus delivered to the nip 17 forms a pool 30 above the nip and this pool is confined at the ends of the rolls by a pair of side closure plates 18 which are held against stepped ends of the rolls by actuation of a pair of hydraulic cylinder units (not shown). The upper surface of the pool 30 (generally referred to as the "meniscus" level) may rise above the lower end of the delivery nozzle so that the lower end of the delivery nozzle is immersed within this pool.

Casting rolls 12 are water cooled so that shells solidify on the moving roller surfaces and are brought together at the nip 17 between them to produce a solidified strip product 19 at the roll outlet. This product may be fed to a standard coiler (not shown).

The illustrated twin roll caster as thus far described is of the kind which is illustrated and described in some detail in our Australian Patent 631728 and our United States Patent 5,184,668 and reference may be made to those patents for appropriate constructional details which form no part of the present invention.

In accordance with the present invention the illustrated twin roll caster is provided with a pair of roll cleaning devices denoted generally as 21 which are disposed on to each side of the pair of casting rolls such that they can be engaged with the outer side extremities of the rolls 12 to opposite sides of the nip 17.

Each cleaning device 21 comprises a brush mounting structure 22 mounted on the machine frame 11 adjacent the rolls 12 and a series of brush heads 23 mounted on the structure 22 by individual pivot arms 24 all pivotally mounted on a common pivot shaft 25 carried on the mounting structure 22. The brush heads 23 are thus mounted on the mounting structure 22 for individual movement by pivoting of their respective pivot arms 24 about pivot mountings 26 disposed along the common pivot shaft 25.

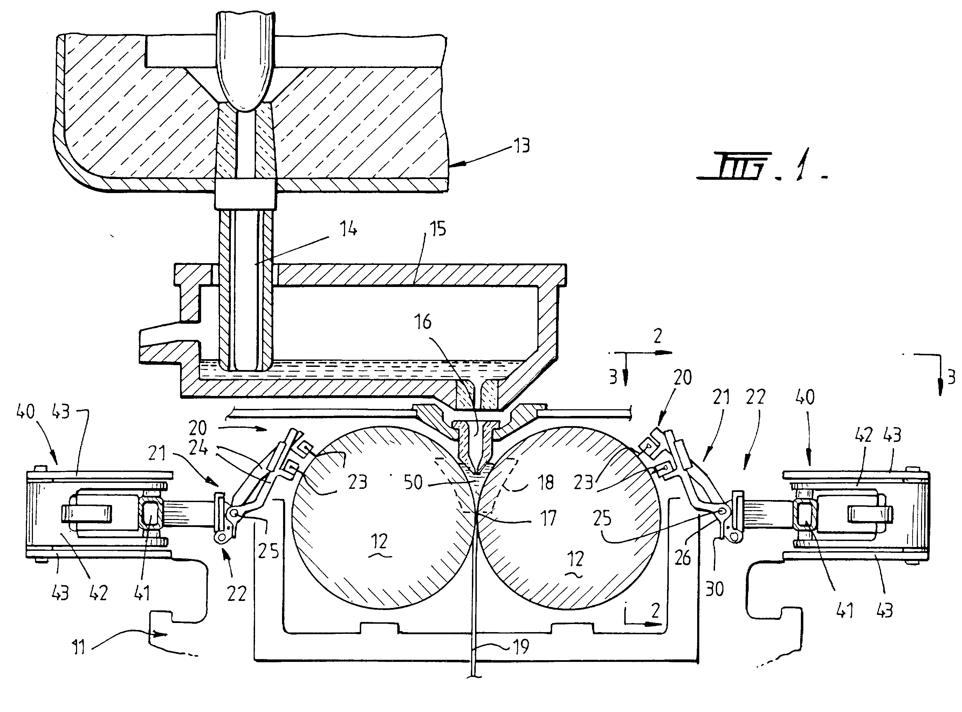

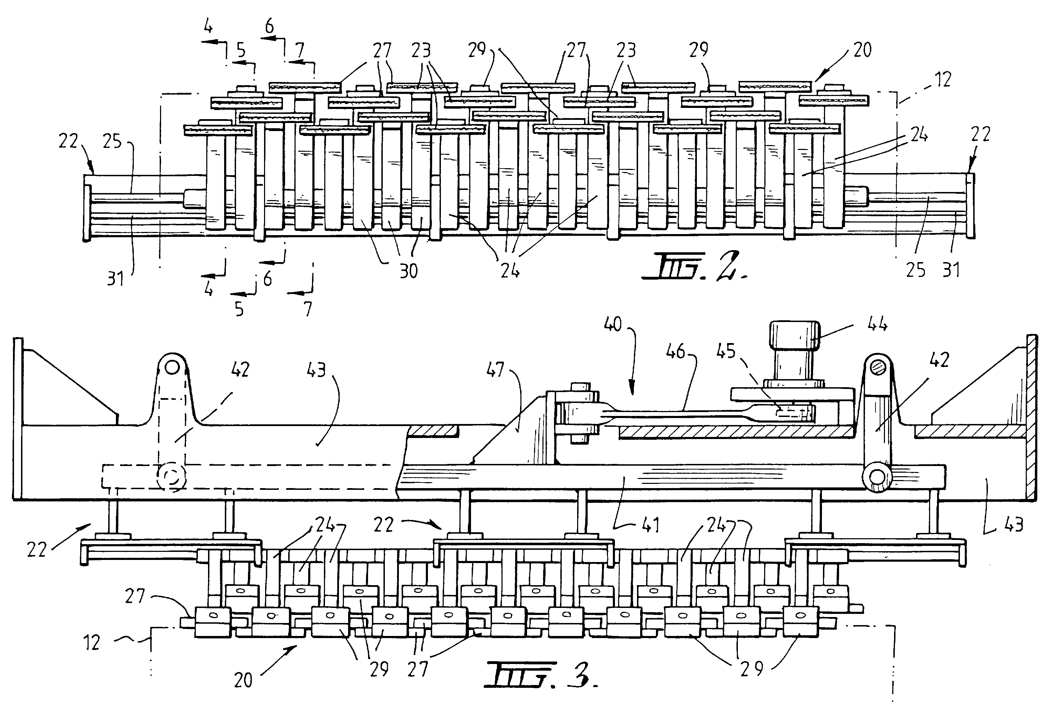

Brush heads 23 are each of elongate form. They each comprise an elongate brush head base 27 and wire brush bristles 28 extending from the base along its length. Brush heads 23 are disposed in four parallel rows defining an elongate brush array denoted generally as 20 and spaced circumferentially of the roll surface with the brush heads of each row being staggered with the brush heads of the adjacent row or rows as is most clearly seen in Figure 2. With this arrangement the gap between each adjacent pair of brush heads in each of the first three rows is "backed" or spanned by a brush head in the next succeeding row so as to maintain brush coverage throughout the width of the brush array. The arrangement is also such that all points on the roll surface are swept successively by two or three brush segments to promote even brushing throughout the roll surface.

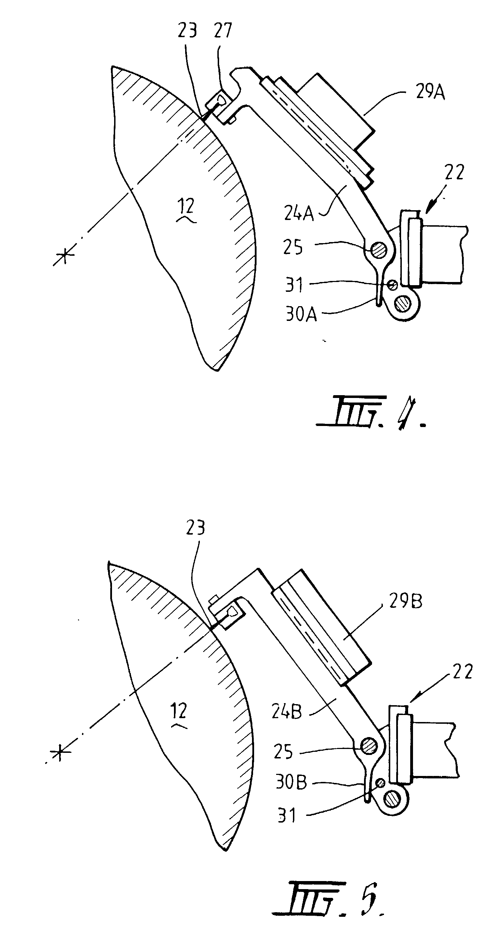

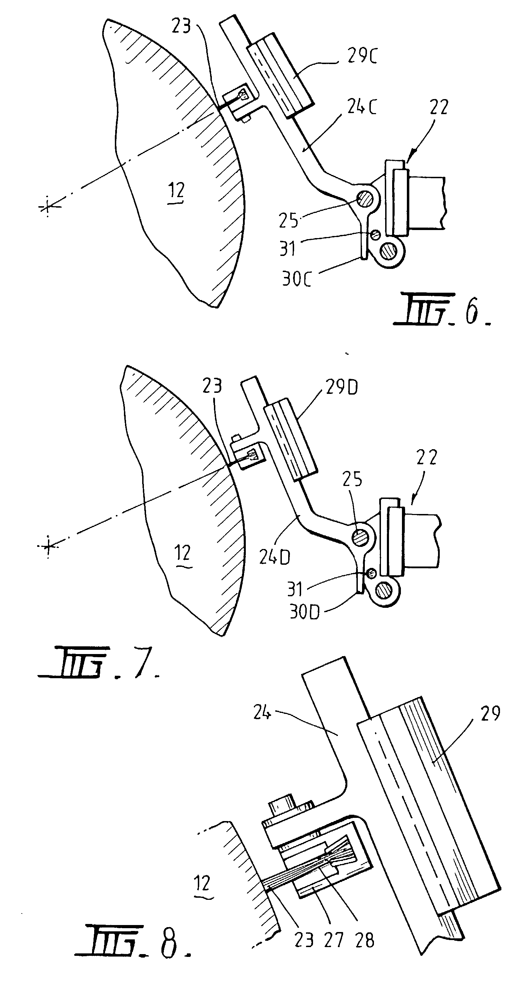

The four rows of brush heads are mounted on four differently shaped sets of the pivot arms 24 indicated as 24A, 24B, 24C and 24D in figures 3 to 6. The shaping of the pivot arms is such that they can all be mounted on the common pivot shaft 25 to locate the brush heads 23 in the four rows and such that the bristles of each brush head are substantially perpendicular to the roll surface with the brush head mounted by the pivot arm for motion in that perpendicular direction. The brush heads are gravity biased against the roll surface by the application of biasing weights 29A, 29B, 29C and 29D on the outer ends of the pivot arms 24A, 24B, 24C and 24D respectively. Because of the different shaping of the pivot arms and the limited space available, the biasing weights for the four rows are applied to the arms at slightly different locations and may also be varied in weight to provide appropriate biasing forces to the respective brush heads 23.

The inner ends of biasing arms 24A-24D are all provided with short extension tabs 30A-30D which will engage a keeper pin 31 to stop the pivot arms and brushes from falling inwardly when the rolls are withdrawn. Keeper pin 31 is mounted on the brush mounting 22 so as to extend in parallel with the common pivot shaft 25. It can be withdrawn to enable the brush heads to be dropped into a lowered position to provide access for cleaning or replacement if necessary.

Brush mounting structures 22 are mounted on the frame 11 for back and forth reciprocation longitudinally of the respective roll 12 and are connected to oscillators 40 actuable to oscillate the brush head arrays back and forth across the casting roll surfaces. More specifically, each brush mounting structure 22 comprises a bar 41 mounted on frame 11 by parallel pivot arms 42 to move back and forth between guide plates 43 on the frame and each oscillated 40 comprises a hydraulic motor 44 with a crank shaft 45 and connecting rod 46 connected to a bracket 47 on the bar 41 of the respective structure 22. In this way the complete elongate array of brush heads can be oscillated linearly of the brush head array. The oscillator allows the frequency and stroke of oscillation to be varied to optimise brushing performance. The stroke may typically be of the order of 5-50mm and frequency may be of the order of 30-300 cycles/minute.

In the illustrated brushing system each brush head is individually gravity biased and the brush head can move without changing the bias. The bias can be very accurately preset simply by selecting and adjusting the appropriate bias weight and the bias on each element will remain absolutely constant throughout operation of the device. It has been found that this very even bias on multiple elements, together with the staggered multi row arrangement of the brush heads and linear oscillation enables very even brushing throughout the whole of the roll surface with significant improvement of the surface quality of the cast strip. The bias on each brushhead may typically be of the order of 0.7 kg to 3kg force.

In the illustrated brushing system, the first and second rows of brush segments essentially form a first continuous brush array and the third and fourth segments constitute a second continuous brush array. In the illustrated arrangement, these first and second arrays are mounted on the same pivot shaft 25 and are oscillated back and forth together. However in a modification it would be possible to mount the two continuous brush arrays on different pivot shafts carried on separated mountings which are oscillated independently of one another. This would enable the two brush sets or arrays to be reciprocated out of phase with one another. For example the two could be reciprocated 180° out of phase to achieve complete dynamic balancing of the oscillatory movements in the system.

## Claims

1. Apparatus for casting metal strip comprising a casting roll (12), metal delivery means (16) to deliver molten metal onto the peripheral surface of the casting roll (12), and a roll cleaning brush device (21) to clean said roll surface, characterised in that the cleaning brush device (21) comprises a brush mounting structure (22) disposed adjacent the roll (12), a series of brush heads (23) mounted by individual pivot arms (24) so as to form an elongate brush array (20) extending across the width of the roll (12) with each brush head (23) of the array individually moveable by pivoting movement of its pivot arm (24) about a respective individual pivot (26) and gravity biased about its pivot against said roll surface, and oscillator means (40) to oscillate the brush mounting structure (22) so as to oscillate the brush array (20) linearly of the array.

2. Apparatus as claimed in claim 1, further characterised in that the pivot arms (24) are pivotally mounted on a common pivot shaft (25) forming part of the brush mounting structure (22) so that the pivot mountings (26) of the arms are spaced along the common shaft (25).

3. Apparatus as claimed in claim 1 or claim 2, further characterised in that the gravity bias of the brush heads (23) is determined by bias weights (29) mounted on the brush heads (23) or on the pivot arms (24) in the vicinity of the brush heads.

4. Apparatus as claimed in any one of the claims 1 to 3, further characterised in that the gravity bias of each brush head (23) about its pivot (26) is substantially perpendicular to the roll surface at the location where the brush head (23) engages the roll surface.

5. Apparatus as claimed in any one of claims 1 to 4, further characterised in that the brush heads (23) are each of elongate form.

6. Apparatus as claimed in claim 5, further characterised in that the brush heads (23) each comprise an elongate brush head base (27) and brush bristles (28) extending from the base (27) along its length.

7. Apparatus as claimed in claim 6, further characterised in that the brush heads (23) are disposed in a plurality of parallel rows defining the elongate brush array (20) and spaced circumferentially of the roll surface with the brush heads (23) of each row being staggered with respect to the brush heads of the or each adjacent row.

8. Apparatus as claimed in claim 6 or claim 7, further characterised in that the brush heads (23) are fixed to the pivot arms (24).

9. Apparatus as claimed in claim 6 or claim 7, further characterised in that the brush heads (23) are mounted on the arms (24) by brush head mountings allowing rocking of the brush heads to self adapt to the roll surface.

10. Apparatus as claimed in any one of claims 1 to 9, further characterised in that the apparatus further comprises a second roll cleaning brush device (21) comprising a second brush mounting structure (22) disposed adjacent the roll (12), a second series of brush heads (23) mounted by a second set of individual pivot arms (24) so as to form a second elongate brush array (20) extending across the width of the roll at a location spaced circumferentially of the roll from the first said elongate brush array (20) and second oscillator means (40) to oscillate the second brush mounting structure (22) independently of the brush mounting structure (24) of the first said brush device (21).

11. Apparatus as claimed in claim 10, further characterised in that the oscillation of the second brush mounting structure (22) out of phase with the brush mounting structure (22) of the first said cleaning brush device (21).

12. Apparatus as claimed in claim 11, further characterised in that the first and second oscillator means (40) are such that the two oscillations are 180° out of phase to provide dynamic balancing of the oscillatory movements.
